# EUROPEAN PATENT APPLICATION

(11) **EP 2 853 727 A1**
(43) Date of publication of application: **01.04.2015**
(21) Application number: 14290253.5
(22) Date of filing: 21.08.2014
(51) Int. Cl.: F02M 35/10, F02B 31/04, F02B 31/06, F02B 27/02

(54) **Charge air duct for an internal combustion engine**

(30) Priority: 30.08.2013 EP 13290203
(71) Applicant: MANN+HUMMEL GmbH, 71638 Ludwigsburg (DE)
(72) Inventor: Migaud, Jérôme, 35500 Vitré (FR); Marteau, Christophe, 53000 Laval (FR); Charil, Jerome, 53200 Chatelain (FR); Girard, Dominique, 53970 Montigné le Brillant (FR); Raimbault, Vincent, 53230 Cosmes (FR)

(57) **Abstract**

The invention relates to a charge air duct (100) for delivering charge air to an intake manifold of an internal combustion engine, said charge air duct (100) comprising a housing (101) with at least one charge air inlet (103) and at least one charge air outlet (104).

According to the invention, said charge air duct (100) comprises control means (105) arranged in the housing (101) to influence the charge air flow, the charge air being guided from the inlet (103) to the outlet (104) via a first duct (102) in a first position of the control means (105) and from the inlet (103) to the outlet (104) via a second duct (108) in a second position of the control means (105), said first duct (102) and said second duct (108) being of different geometry

## Description

### TECHNICAL FIELD

The present invention relates to a charge air duct for an internal combustion engine

More particularly, it relates to a charge air duct for a turbocharged engine, such as a one-stage turbocharged engine.

### BACKGROUND OF THE INVENTION

"Charge air" within the meaning of the invention shall be understood as compressed air, compressed by an exhaust turbocharger or any other kind of charger.

For turbocharged engines, geometry (diameter and length) of charge air ducts (also called charge air delivery ducts) is tuned to take benefits from pressure waves for improving the air filling into the engine cylinders, and thus combustion.

However, optimal geometry of charge air ducts is dependent on engine speed.

At high engine speeds, for example above around 1500 rpm (for "revolutions per minute"), and high load, the turbocharger compresses the supplied air in an effective manner. Under these engine operating conditions, a charge air duct of small length and larger diameter is suitable in order to reduce pressure loss and increase the engine power.

At low engine speeds (around 1250 rpm for instance) and part load operation, the turbocharger compressor is not very effective (the charging effect of the turbocharger is poor and limits the engine output torque). Under these engine operating conditions, a longer duct having a reduced inlet diameter is appropriate in order to increase the engine feeding (i.e. the mass of gas introduced into the combustion chamber) and thus the volumetric efficiency.

Conventional charge air ducts have a fixed length, which is a trade off between engine torque and power. With a charge air duct of fixed length, the engine performance is optimized at a specific engine speed, but not on a large operating range.

Also, because of harsh environmental requirements in the automotive sector, aiming to reduce fuel consumption and CO₂ emissions, there is a great demand for increase in the engine output torque of a turbocharged engine in the low engine speed range.

### SUMMARY OF THE INVENTION

The main objective of the present invention is to propose a charge air duct which is more efficient that the prior art devices.

In particular, an objective of the invention, in at least one embodiment, is to provide a charge air duct which can be easily adapted to different engine operating situations.

Another objective of the invention, in at least one embodiment, is to provide a charge air duct which can increase the engine output torque in the low engine speed range without adversely affecting the engine output torque in the high engine speed range.

A further objective of the invention, in at least one embodiment, is to provide a charge air duct which is reliable, compact, cheap to manufacture and easy to assemble.

Another objective of the invention, in at least one embodiment, is to provide a charge air duct which limits air pressure loss and maximizes the amount of air sucked by the engine.

The purpose of the present invention is to remedy these drawbacks by proposing a charge air duct for delivering charge air to an intake manifold of an internal combustion engine comprising a housing with at least one charge air inlet and at least one charge air outlet.

According to the invention, such a charge air duct comprises control means arranged in the housing to influence the charge air flow, the charge air being guided from the inlet to the outlet via a first duct in a first position of the control means and from the inlet to the outlet via a second duct in a second position of the control means, said first duct and said second duct being of different geometry.

Thus, the invention concerns a charge air duct arranged between the charge air cooler and the intake manifold plenum of a combustion engine.

The invention proposes to integrate in the housing of such a charge air duct two ducts of different geometry, e.g. two ducts having different lengths and cross-sections.

A switchable device, such as a rotatable flap, is used to close a first duct and thus force the air flow to go inside the second duct, or to open the first duct and thus force the air flow to go inside that first duct, depending on the engine operating situation.

By using such a regulating flap, a charge air flow can be directed through one or the other duct in an adjustable manner.

As mentioned previously, the geometry of ducts is an important factor that influences airflow and how much torque an engine can provide.

The charge air duct of the invention is advantageous in that the effective geometry of the charge air duct can be varied according to engine speed for instance, thus improving the engine operation over its entire operating range.

Such a charge air duct also improves fuel economy over the entire operating range of the engine.

In accordance with another aspect of the present invention, the length of said second duct is greater than the length of said first duct.

In accordance with another aspect of the present invention, the cross-section of said first duct is greater than the cross-section of said second duct.

The first duct, which is of circular cross-section preferably, can be shorter and larger than the second duct, for instance.

In an alternative, both short and long ducts have substantially the same cross-section.

As mentioned previously, the invention provides a charge air duct which can be easily adapted to different operating situations.

Two air transmission routes are provided, one or the other being used according to the position of switchable device in response to the engine speed.

At high engine speeds, the shorter and larger path is opened, so that a greater amount of charge air can be provided to the intake plenum in order to improve high engine speed torque.

At low engine speeds, the amount of the airflow is increased by directing the air through a longer path with a smaller cross-sectional area in order to improve low engine speed torque, using pressure waves phenomena synchronized with the inlet valve closing. Indeed, by making the passage narrower and longer, the amount of charge air provided in the intake plenum is increased, thus improving the filling of the cylinders and low engine speed torque.

In accordance with another aspect of the present invention, the control means close said first duct in said second position and open said first duct in said first position without closing said second duct.

The regulating flap is arranged within the first short duct, allowing the charge air to flow within the first short duct in a first position, or closing the latter in a second position. Charge air may possibly flow in the second long duct in that first position, thus increasing air feeding in the intake manifold plenum.

In accordance with another aspect of the present invention, the control means comprise a first valve rotatable about an axis extending along a diameter of said first duct.

The actuator, such as a flap, is mounted on rotating means secured to the short duct at diametrically opposed locations (i.e. on opposite ends of the diameter of the short duct).

In accordance with another aspect of the present invention, said second duct is swirling or spiralling around said first duct.

In accordance with another aspect of the present invention, said first duct and said second duct have the same longitudinal axis.

The charge air duct is thus of compact design.

In accordance with another aspect of the present invention, the longitudinal axis of said first duct and the longitudinal axis of said second duct are substantially parallel.

In accordance with another aspect of the present invention, said second duct is a helical duct comprising a helical fin arranged on the outer wall of a central part defining a swirling path for the charge air flow.

The second duct has the general shape of a screw, i.e. it comprises a helical fin (i.e. a spiralling fin) arranged on the outer wall of a central part defining a swirling or spiraling path for the charge air flow.

The central tube may be hollow and its inner space may define the first duct.

In accordance with another aspect of the present invention, the longitudinal axis of said first duct and the longitudinal axis of said second duct are substantially orthogonal.

In accordance with another aspect of the present invention, said second duct is designed as a double helix comprising a first clockwise helical duct portion in communication with a second anti-clockwise helical duct portion, each duct portion comprising a helical fin arranged on the outer wall of a central part, the helical duct portions defining a swirling path in two opposite directions for the charge air flow.

This provides a compact charge air duct.

In accordance with another aspect of the present invention, said charge air duct comprises a chamber arranged between said charge air inlet and said first and second ducts.

Such a chamber is arranged on the inlet side of the charge air duct, between the charge air cooler and the long and short ducts. It is designed to improve the reflection in order to enhance the pulsation level and thus to maximize the amount of air sucked by the engine.

In accordance with another aspect of the present invention, said chamber is connected to said second duct via an opening, said opening extending in a plane substantially perpendicular to the longitudinal axis of the chamber

Such an arrangement limits the air pressure loss.

In accordance with another aspect of the present invention, the at least one helical fin is in contact with the inner surface of said housing.

In accordance with another aspect of the present invention, said inner surface and/or said at least one helical fin comprise(s) sealing means.

In accordance with another aspect of the present invention, said second duct comprise several bends designed to redirect the charge air flow by an angle comprised between 90° and 180°.

By providing several bends, the length of the second duct is increased while keeping the size of the second duct compact.

In accordance with another aspect of the present invention, said charge air duct comprises a second valve located in said second duct.

### BRIEF DESCRIPTION OF THE DRAWINGS

The features of the charge air duct which is the subject of the invention are described in greater detail by referring to the attached non limiting drawings in which:
Figures 1A and 1B show schematic sectional views of a first embodiment of a charge air duct according to the invention;
Figure 1C is a top view of the charge air duct of Figure 1A;
Figures 2A and 2B show schematic sectional views of a second embodiment of a charge air duct according to the invention;
Figures 3A and 3B show schematic sectional views of a third embodiment of a charge air duct according to the invention;
Figures 4A and 4B show schematic sectional views of a fourth embodiment of a charge air duct according to the invention;
Figure 4C is a cross-sectional view along the axis A-A of the charge air duct of Figure 4A;
Figures 5A and 5B show schematic views of a fifth embodiment of a charge air duct according to the invention;
Figure 5C is a detailed sectional view of Figure 5A;
Figures 6A and 6B show schematic views of a sixth embodiment of a charge air duct according to the invention;
Figure 6C is a detailed sectional view of Figure 6A;
Figure 6D is a top view of the charge air duct of Figure 6B;
Figures 7A to 7F are detailed sectional views of the charge air duct according to the first embodiment of the invention showing alternative sealing solutions;
Figures 8 and 9 show two possible ways of connecting a charge air duct according to an embodiment of the invention with an intake manifold of a combustion engine;
Figure 10 shows one way of connecting the charge air duct according to the fourth embodiment of the invention with an intake manifold of a combustion engine;
Figure 11 is a further embodiment of a charge air duct according to the invention incorporating an additional chamber between the inlet side and the long and short ducts.

### DETAILED DESCRIPTION

A detailed description of several exemplary embodiments of the invention follows with reference to the figures provided.

In the different embodiments described below, the charge air duct is located between the outlet of the charge air cooler and the intake manifold plenum of a combustion engine provided with a one-stage or two-stage turbocharger.

In such a combustion engine, intake air is directed in an air filter delivering clean air to a compressor of a turbocharger. The compressed air leaving the turbocharger is directed via a first charge air duct (which is not the subject matter of the invention) through a charge air cooler. The charge air cooler is used to reduce the temperature (and thus increase the density) of the compressed air before the cooled air reaches the air inlet side of the intake manifold plenum via a second charge air duct (which is the subject matter of the invention).

It is to be noted that the charge air duct of the invention is not a runner of an intake manifold of an internal combustion engine (it is known that the intake manifold of such an engine comprises an air plenum feeding different cylinders via a respective runner).

The charge air duct of the invention comprises a first short duct (also called main duct) and a second long duct (also called bypass duct). The charge air is routed into one or the other of these ducts using a control device. In other words, the air is fed through the main duct or the bypass duct depending on the position of the control device.

Thus, the active charge air duct of the invention is of variable length and, unlike conventional charge air ducts of fixed length, it can be easily adapted to different engine operating situations.

Advantageously, the charge air routing is adapted to various engine operating conditions using a single control device.

In the embodiments described hereinafter, the arrows are schematic representations of the charge air flow through the short and long ducts.

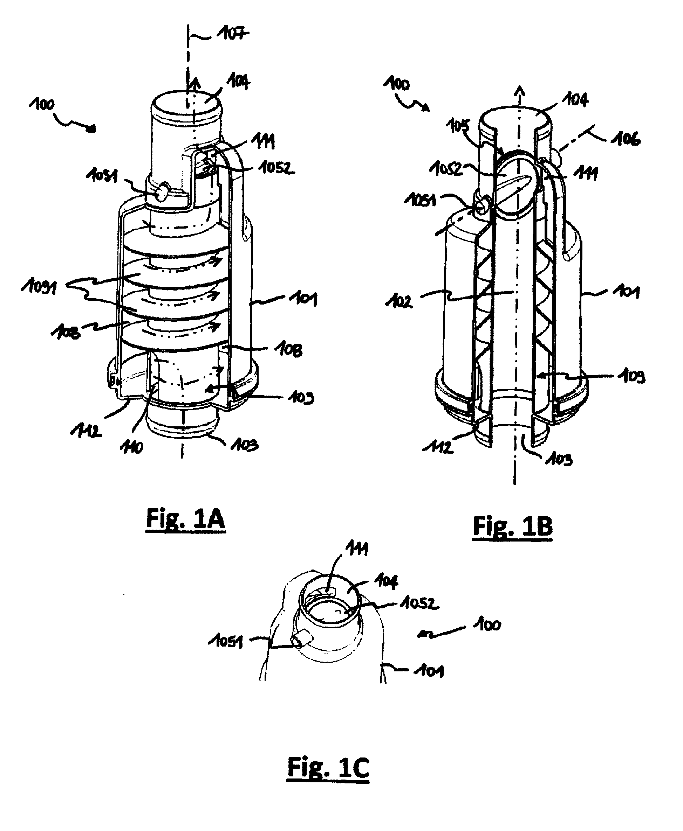

Figures 1A to 1C show the charge air duct according to a first embodiment of the invention.

The charge air duct 100 comprises a body (or housing) 101 in which a cylindrical hollow tube (or central part) 109 is fitted. The inner part of the tube 109 defines a main duct 102. The main duct 102 has an air inlet 103, into which the charge air flows, and an air outlet 104 in which a control device (or switching means) 105 is positioned.

As mentioned before, the air fed in the air inlet 103 is compressed by a turbocharger of the combustion engine and cooled by the charge air cooler. The air flowing through the air outlet 104 is directed in the intake manifold plenum and different combustion chambers of the engine.

The air inlet and outlet 103, 104 have a circular cross-section in this example.

Figure 1C is a detailed view of Figure 1A showing the control device 105 in its closed position. The control device, or valve, 105 comprises a disc shaped flap 1052 mounted on a shaft 1051, which is secured at both ends to the wall of the main duct 102. The shaft 1051, and thus the control device 105, can be rotated by way of an actuator (not shown) around an axis 106, which is perpendicular to the longitudinal axis 107 of the main duct 102.

A swirl or helical lip (or fin, or helix) 1091 is arranged on the outer surface of the tube 109. The swirl fin 1091 extends in the space defined between the main duct 102 and the housing 101, this space being sealed at both ends (in particular by a cover 112 at the air inlet end).

The helix 1091 forms several turns over a complete revolution around the axis 107, and its outer periphery is in contact with the inner surface of the housing 101, thus defining a long swirl duct 108. The long duct 108 is arranged (formed) around the main short duct 102 and is separated from the main duct 102 by a dividing wall.

The slope of the helix 1091 is here of the order of 10° relative to a horizontal plane but may vary depending on the desired long duct length.

A first radial opening or passage 110 is provided in the main duct 102 in the region of the air inlet 103.

A second radial opening 111 is provided in the main duct 102 in the region of the air outlet 104. The radial opening 111 is located between the control device 105 and the air outlet 104.

Depending on a rotational position of the shaft 1051, the flap 1052 of the control device 105 is capable of opening and closing the air passage delimited by the inner surface of the main duct 102. Preferably, the flap 1052 switches between two states (i.e. on or off) only.

The flap 1052 can be part of a progressive valve in an alternative embodiment. The flap 1052 can be an hinge flap or any other type of valve.

The disc shaped flap 1052 has an outer diameter, which is slightly smaller than the inner diameter of main duct 102, which is of a cylindrical shape. When the shaft 1051 is rotated to a position at which the flap 1052 is perpendicular to the longitudinal axis 107 of the main duct 102, the main duct 102 is fully closed by the flap 1052.

Although it is not illustrated, the flap 1052 is designed so as to prevent leakage of the charge air when closed. In a preferred embodiment, a seal ring assembly is provided at an outer periphery of the disc flap 1052, so as to seal any gap existing between the inner peripheral surface of the main duct 102 and the outer periphery of the flap 1052.

When the engine operates at low speed range, the flap 1052 is closed (i.e. it is in the long duct position) as shown in Figure 1A. Charge air is directed in the long duct 108.

As illustrated by the arrows, the charge air flow enters the short duct 102 in the axial direction via the air inlet 103 and exits through the first radial opening 110 into the long duct 108 (it is thus redirected by approximately 90°). Once it has circulated in the long duct 108, swirling around the main duct 102, the charge air flow enters the short duct 102 through the second radial opening 111 and exits the short duct 102 in the axial direction via the air outlet 104.

When the engine operates at high speed range, the control device 105 is moved into its opened position (or short duct position), as shown in Figure 1B, and the charge air flows directly through the main duct 102 from the air inlet 103 to the air outlet 104. Due to the fact that control device 105 does not close the first and second radial openings 110, 111 when in its opened position, a portion of the inlet air can possibly flow within the long duct 108. Thus, air feeding in the intake manifold plenum is increased when the control device 105 is in its opened position, since the control device does not close the long duct 108 in that opened position.

In one embodiment, the control device 105 is connected to an actuator to allow selectable positioning depending from at least one input. Such an input can be a measured engine speed, and/or a measured charge air pressure, and/or a turbocharger/compressor performance for instance.

Such an actuator can be an electromechanical or pneumatic actuator driven by an electronic control device that includes software.

A sensor for monitoring the position of the control device 105 can be provided.

In another embodiment, the control device 105 is self-actuated.

In short, in the high engine speed range (above 1500 rpm for instance), in which the turbocharger compresses (i.e. increases the pressure) the supplied air in an effective manner, the flap 1052 is opened so as to route the charge air in the short (main) duct 102.

In the low engine speed range, in which the action of the turbocharger is minimal or non-existent, the position of the flap 1052 is switched. The flap 1052 closes the main duct 102 so as to route the air in the bypass (long) duct 108.

The volumetric efficiency is thus increased in the low engine speed range, where usually the effect of the turbocharger is unsatisfactory, without degrading the volumetric efficiency in the high engine speed range.

Indeed, charge air pressure losses are decreased in the high engine speed range, thus increasing the supply of air (and volumetric efficiency) in this range and improving engine power.

Also, higher torque at low speed reduces the engine operating speed (i.e. it enables engine downspeeding), thus reducing fuel consumption, and/or improving dynamic behaviour of the vehicle (less time to torque and faster acceleration).

The main short duct 102 is 600 mm long for instance and has a diameter (cross section) superior to 50 mm (equal to 57 mm for instance), the long duct 108 being 1400 mm long for instance and its diameter being inferior to 30 mm preferably (equal to 28 mm for instance). Thus, the flow cross section of the long duct 108 is smaller than the flow cross section of the main duct 102.

The length and cross section of the charge air duct 100 is thus adjusted based on engine speed, in this example.

In other words, the charge air duct 100 is configured to switch between two modes, i.e. a long route and a short route.

It is to be noted that the charge air duct 100 is manufactured using an injection molding process. The charge air duct 100 is assembled by inserting the cylindrical tube 109 on which the swirl fin 1091 is formed inside the housing 101, and by securing the cover 112 at one end of the housing 101.

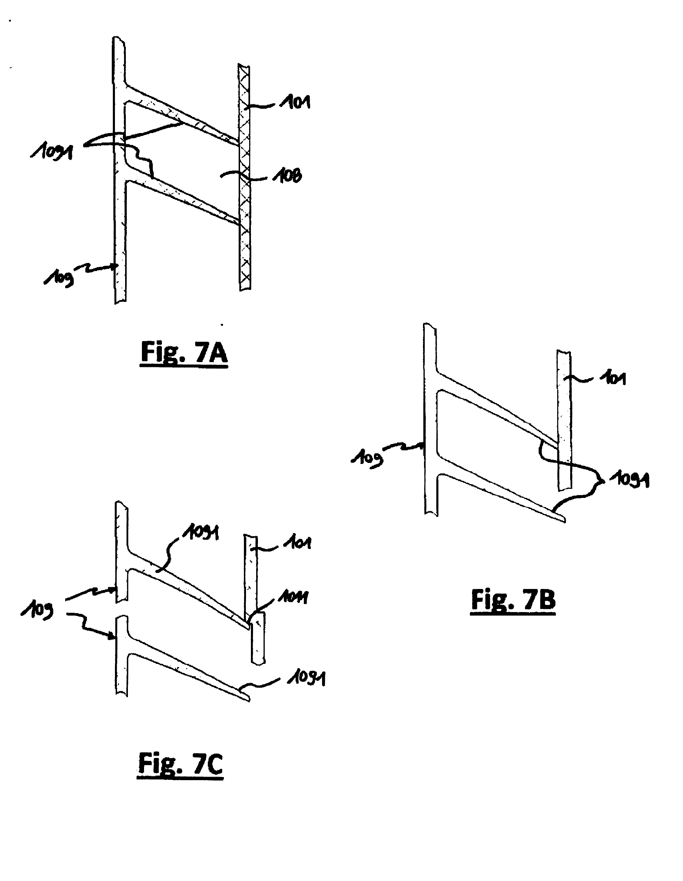

Figures 7A to 7F show several possible ways of ensuring the sealing of the swirl lip 1091 (and thus the long duct 108) against the inner wall of the housing 101.

In the example of Figure 7A, the long duct sealing is carried out by adjustment of the lip 1091 against the inner surface of the housing 101 so that the outer periphery of the lip 109 is in contact with the inner surface of the housing 101. Such an adjustment suppresses, or minimizes, the gap between the free end of the lip 1091 and the housing 101.

In the alternative example of Figure 7B, long duct sealing is carried out radially by using the flexibility of the swirl lip 1091 and by bending it against the inner surface of the housing 101. In this figure 7B, the bottom view shows the lip 1091 in its free state before assembly (i.e. before insertion of the tube 109 in the housing 101) and the top view shows the same lip 1091 in the assembled state in which it is bended and in contact with the inner surface of the housing 101.

In the example of Figure 7C, long duct sealing is carried out axially by using the flexibility of the swirl lip 1091. The swirl lip 1091 is bent against the inner surface of the housing 101 where it is retained in a bended state by a notch 1011 configured on the inner surface of the housing 101. In this figure 7C, the bottom view shows the lip 1091 in its free state before assembly and the top view shows the lip 1091 in the assembled state once bended and in contact with the notch surface 1011.

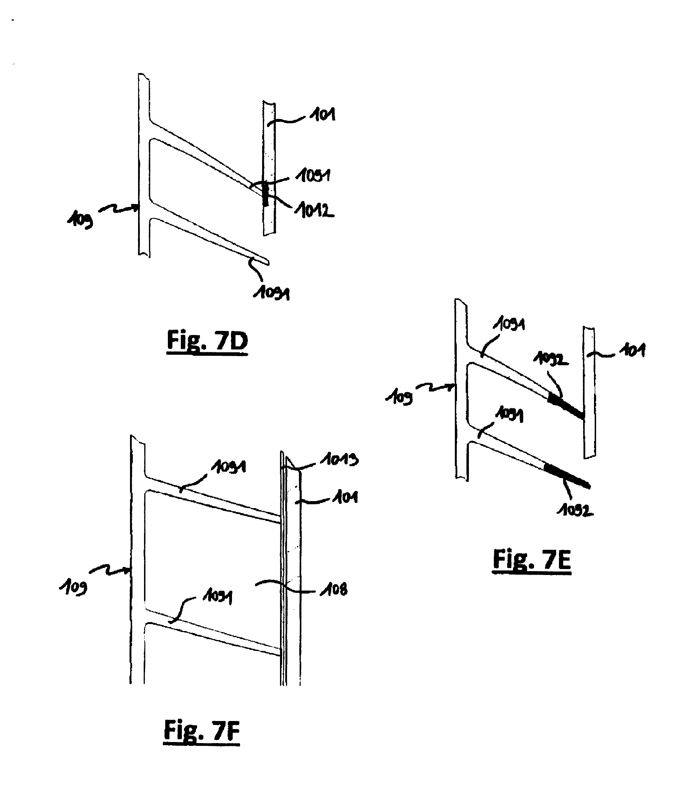

In the example of Figure 7D, long duct sealing is obtained by providing a swirling overmolded seal 1012 on the inner surface of the housing 101 against which the bended lip 1091 is in contact. In this figure 7D, the bottom view shows the lip 1091 in its free state before assembly and the top view shows the lip 1091 in the assembled state once bended and in contact with the seal 1012.

In the example of Figure 7E, long duct sealing is obtained by providing a seal 1092 at the free end of the lip 1091 (such a seal 1092 may be overmolded on the lip 1091), the seal 1092 being designed to come into contact against the inner surface of the housing 201 once the lip 2091 is bended. In this figure 7E, the bottom view shows the lip 1091 in its free state before assembly and the top view shows the lip 1091 in the assembled state once bended.

In the example of Figure 7F, long duct sealing is obtained by providing a welded sheet 1013 on the inner surface of the housing 101. The welded sheet 1013 may cover a part or the entire inner surface of the housing 101.

It is to be noted that sealing can be maximized by providing a welded sheet 1013 or an overmolded seal 1012 on the inner surface of the housing 101 combined with an overmolded seal 1092 at the free end of the lip 1091 for instance.

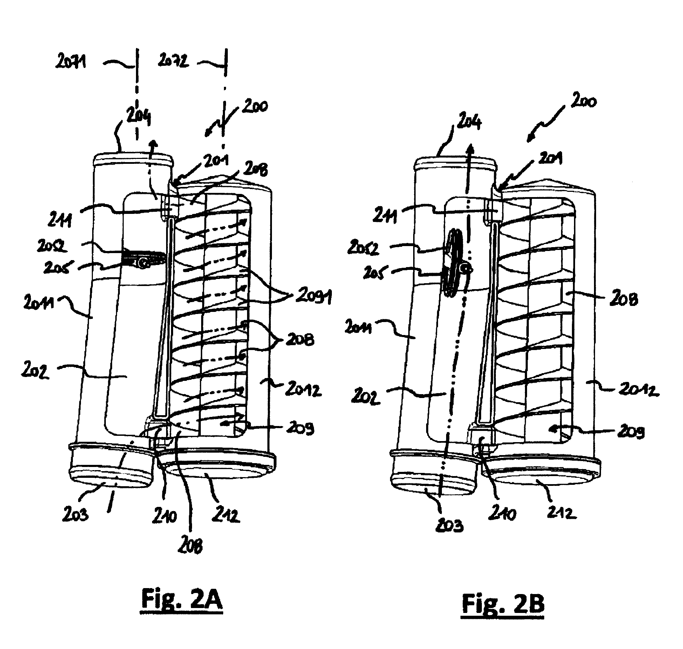

It is also to be noted that the sealing arrangements described in relation to figures 7A to 7E may also be applied to the charge air ducts described in the embodiments of figures 2A-2B, figures 4A-4C and figure 11.

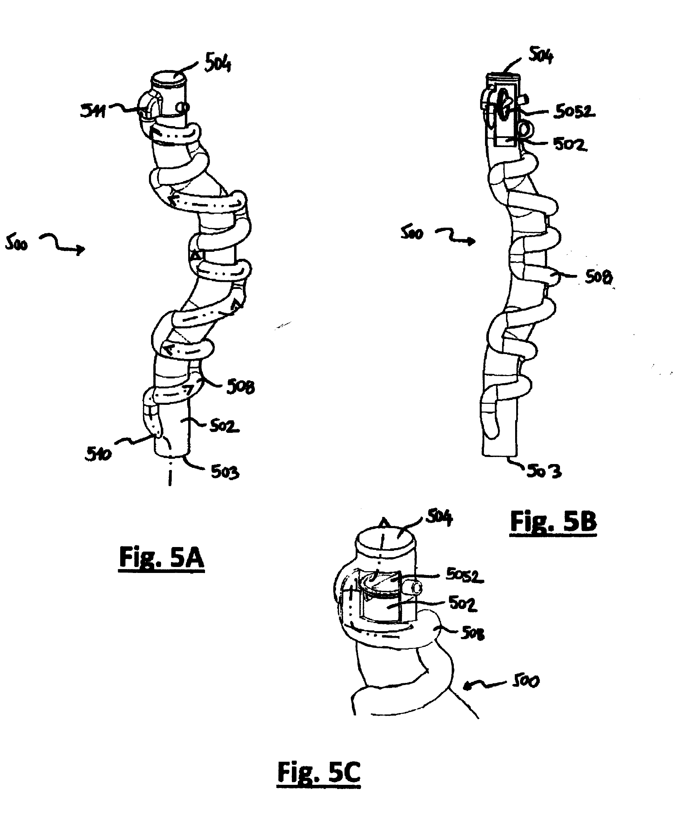

Figures 5A to 5C show an alternative embodiment of a charge air duct 500. Components in these figures corresponding to those in Figures 1A to 1C have reference numerals which are 400 or 4000 higher. The charge air duct 500 in this embodiment comprises a long duct 508 designed as a swirl duct and arranged around a main short duct 502, which is bended.

It is to be noted that the long duct 508 is blow molded on and around the short duct 502.

In figure 5A, the flap 5052 is closed so that charge air is directed as illustrated by the arrows from the inlet port 503 into the long duct 508 via the radial opening 510. As illustrated in Figure 5C, which is a detail view of Figure 5A, air flowing into the long duct 508 is directed towards the outlet port 504 via the radial opening 511. The radial opening 511 is located between the control device 505 and the air outlet 504.

In figure 5B, the flap 5052 is opened so that charge air is directed as illustrated by the arrows from the inlet port 503 to the outlet port 504 via the short duct 502.

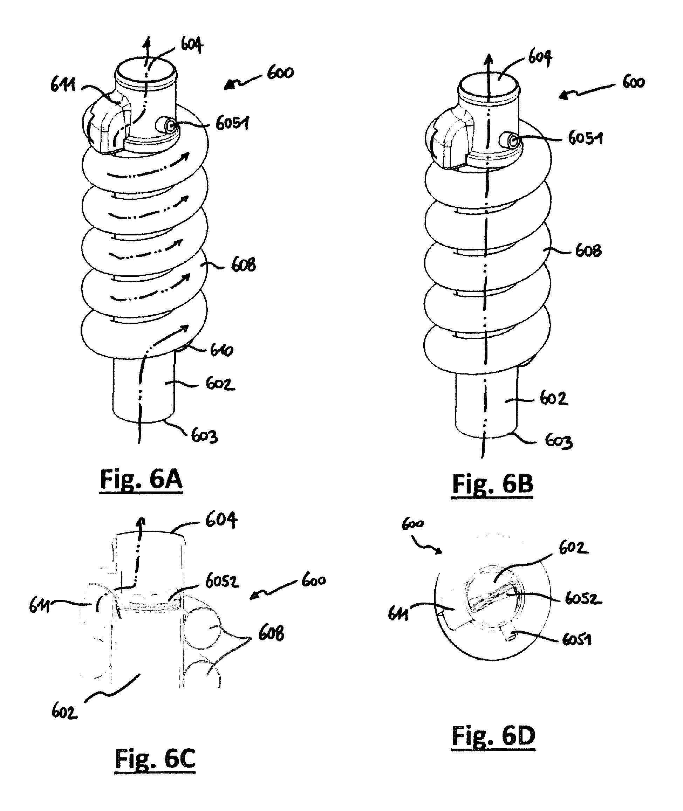

Figures 6A to 6C show another alternative embodiment of a charge air duct 600 in which the long duct 608 is also blow molded on and around the short duct 602.

Components in these figures corresponding to those in Figures 1A to 1C have reference numerals which are 500 or 5000 higher.

It is to be noted that the main duct 602 is straight in this embodiment.

In figure 6A, the flap 6052 is closed so that charge air is directed as illustrated by the arrows from the inlet port 603 into the long duct 608 via the radial opening 610. As illustrated in Figure 6C, which is a detail view of Figure 6A, air flowing into the long duct 608 is directed towards the outlet port 604 via the radial opening 611. The radial opening 611 is located between the control device 605 and the air outlet 604.

In figure 6B, the flap 6052 is opened (this is shown in Figure 6D which is a top view of the charge air duct 600 of Figure 6B) so that charge air is directed as illustrated by the arrows from the inlet port 603 to the outlet port 604 via the short duct 602.

Figures 2A and 2B show the charge air duct 200 according to another embodiment of the invention in which the longitudinal axis 2071 of the long duct 208 is substantially parallel to the longitudinal axis 2072 of the short duct 202.

Thus, unlike the previous embodiments, the long duct 208 in this embodiment does not swirl around the short duct 202.

Components in these figures corresponding to those in Figures 1A to 1C have reference numerals which are 100 or 1000 higher.

The housing 201 of the charge air duct 200 comprises a first hollow cylindrical part 2011 defining the short duct 202 and a second juxtaposed hollow cylindrical part 2012. A rotating flap 2052 is located inside the short duct 202. A tube 209 carrying a swirling lip 2091 is inserted inside the second cylindrical part 2012 (which is closed by a cover 212), thus defining the long duct 208.

When the flap 2052 is closed (figure 2A), charge air from the air inlet 203 is directed in the long duct 208 via a radial air opening 210. Charge air is then directed towards the air outlet 204 via a radial air opening 211.

When the flap 2052 is opened (figure 2B), charge air flows in the short duct 202.

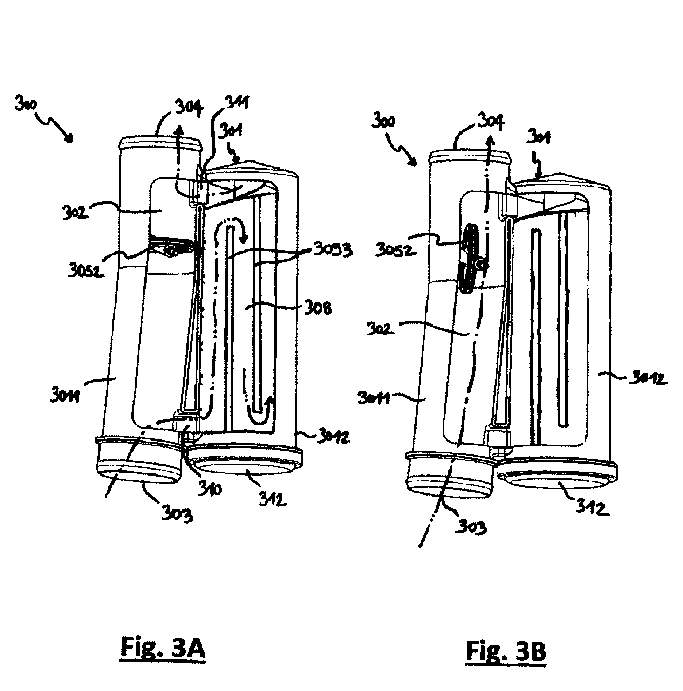

Figures 3A and 3B show the charge air duct 300 according to another embodiment in which the longitudinal axis of the long duct 308 is substantially parallel to the longitudinal axis of the short duct 302. Components in these figures corresponding to those in Figures 1A to 1C have reference numerals which are 200 or 2000 higher.

In this embodiment, the housing 301 of the charge air duct 300 comprises a first hollow cylindrical part 3011 defining the short duct 302 and a second juxtaposed hollow cylindrical part 3012. A rotating flap 3052 is located inside the short duct 302. An insert 309 carrying several bends 3093 is inserted inside the second cylindrical part 3012 (which is closed by a cover 312), thus defining the long duct 308.

When the flap 3052 is closed (figure 3A), charge air from the air inlet 303 is directed in the long duct 308 via a radial air opening 310. Air is redirected by 180°, the sequence of redirection or bends forming a "S". Charge air is then directed towards the air outlet 304 via a radial air opening 311.

When flap 3052 is opened (figure 3B), charge air flows in the short duct 302.

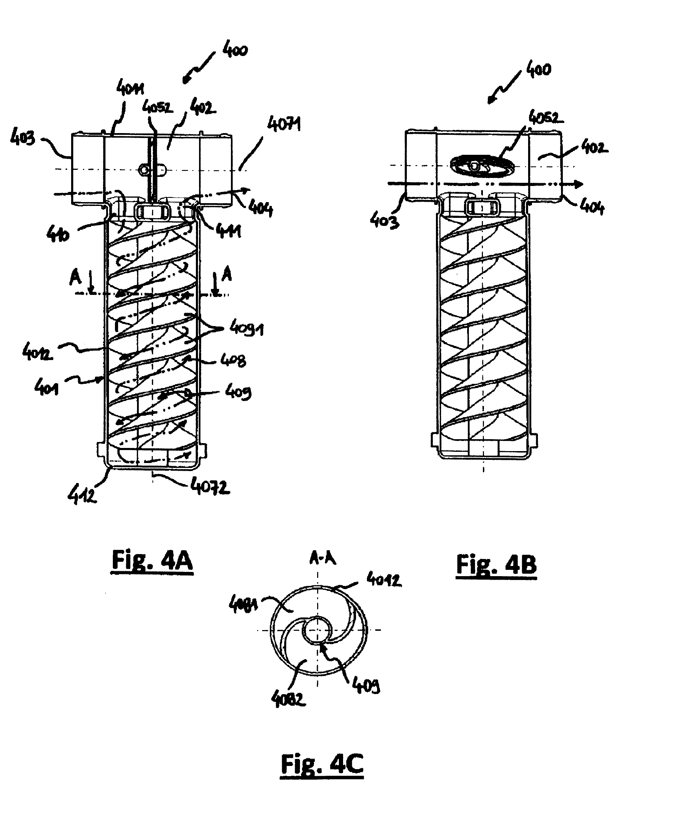

With reference to Figures 4A to 4C, it is shown a charge air duct 400 according to another embodiment of the invention. Components in these figures corresponding to those in Figures 1A to 1C have reference numerals which are 300 or 3000 higher. The housing 401 in this embodiment has a general "T" shape and comprises a first hollow cylindrical part 4011 whose longitudinal axis 4071 is perpendicular to the longitudinal axis 4072 of a second hollow cylindrical part 4012.

A rotating flap 4052 is located within the short duct 402 formed by the hollow cylindrical part 4011. A tube, or central part, 409 carrying a double helix 4091 is inserted inside the second cylindrical part 4012 (which is closed by a cover 412), thus defining the long duct 408.

Each of the helix forming the double helix 4091 forms several turns, clockwise or anticlockwise, over a complete revolution around the axis 4072. The outer periphery of each helix is in contact with the inner surface of the housing 401, thus defining a long swirl duct 408. The long duct 408 comprises a first duct portion 4081 which is in communication with a second duct portion 4082 near the bottom end of the second hollow cylindrical part 4012.

When the flap 4052 is closed (figure 4A), charge air from the air inlet 403 is directed in the long duct 408 via a radial air opening 410. First, air is spiralling down within the first duct portion 4081, and then is spiralling up within the second duct portion 4082 (Figure 4C is a section view along the axis A-A of the charge air duct 400 of Figure 4A). Charge air is then directed towards the air outlet 404 via a radial air opening 411.

When flap 4052 is opened (figure 4B), charge air flows in the short duct 402.

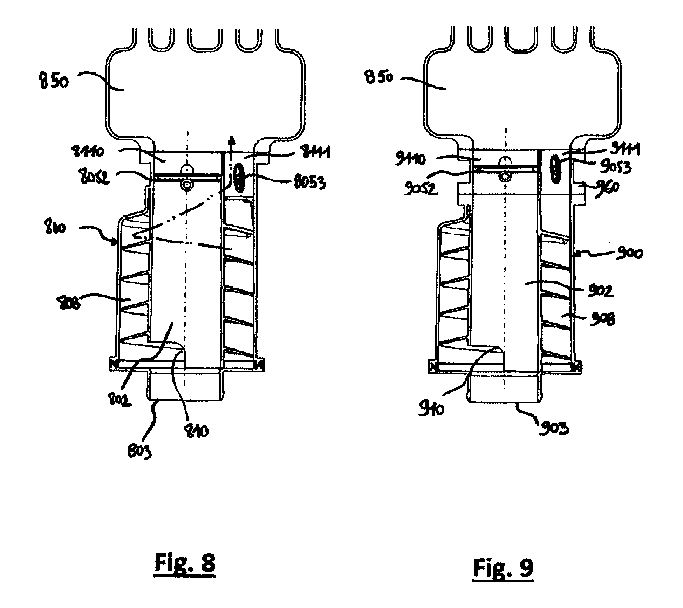

Figures 8 and 9 show two possible ways of connecting a charge air duct according to an embodiment of the invention with an intake manifold of a combustion engine.

The charge air duct 800 shown in Figure 8 comprises a short duct 802 and a long duct 808 spiralling around the short duct 802. The on/off flap 8052 is positioned so as to close the short duct 802. The charge air flow entering the air inlet 803 is thus directed in the long duct 808 and flows out of the air outlet 8111 into the plenum of the intake manifold 850. Although not illustrated, when the on/off flap 8052 opens the short duct 802, air flows out of the air outlet 8110 into the plenum of the intake manifold 850 (there is a single radial air opening 810 between the short duct 802 and the long duct 808).

The charge air duct 800 comprises a throttle valve 8053 located in the air outlet 8111. The throttle valve 8053 can be an on/off valve or a progressive valve.

Thus, in this embodiment, the on/off flap 8052 and the throttle valve 8053 are integrated in the charge air duct 800, which is secured to the intake manifold 850. The direct connection of the charge air duct 800 on the plenum of the intake manifold 850 is advantageous in that it eliminates the need to use a dosing device in the intake manifold.

Such an on/off flap and a throttle valve can also be integrated in the charge air duct 400 for instance (the throttle valve would be located in the air outlet 411 in that case).

The throttle valve 8053 allows the dosing of charge air from the long duct 808 into the plenum of the intake manifold 850.

In figure 9, the on/off flap 8052 and the throttle valve 8053 are not integrated in the charge air duct 800, but in an intermediate housing 960 which is secured at one end to the charge air duct 900 and at the other end to the intake manifold 950. In other words, the on/off flap 8052 and the throttle valve 8053 form an added system to the charge air duct 900.

Components in these figures corresponding to those in Figure 8 have reference numerals which are 100 or 1000 higher.

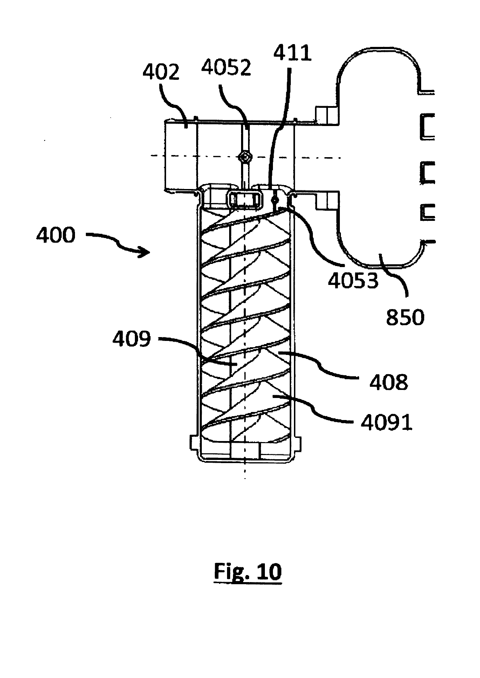

Figure 10 show one possible way of connecting the charge air duct 400 according to the embodiment described in relation to figures 4A to 4C with an intake manifold 850 of a combustion engine.

As mentioned previously, the charge air duct 400 comprises a rotating flap 4052 located within the short duct 402 formed by the hollow cylindrical part 4011. A tube, or central part, 409 carrying a double helix 4091 defines the long duct 408.

In this embodiment, the charge air duct 400 further comprises a throttle valve 4053 located in the air opening 411. The throttle valve 4053 can be an on/off valve or a progressive valve.

In other words, the on/off flap 4052 and the throttle valve 4053 are integrated in the charge air duct 400.

The throttle valve 4053 allows the dosing of charge air from the long duct 408 into the plenum of the intake manifold 850.

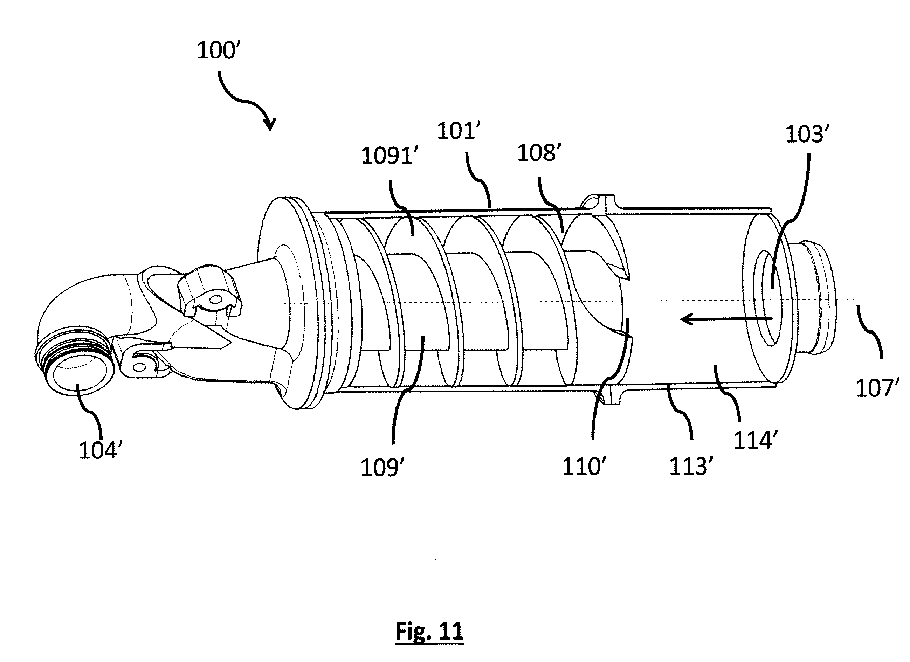

Figure 11 shows the charge air duct according to a further embodiment of the invention. Components in these figures corresponding to those in Figures 1A to 1C have reference numerals which are identical (except that a quote has been added).

The charge air duct 100' comprises a cylindrical body (or housing) 101' in which a cylindrical hollow tube (or central part) 109' is fitted. The inner part of the tube 109 defines the largest duct (not visible). The charge air duct 100' has an air inlet 103', into which the charge air flows, and an air outlet 104 in which a control device (not visible) is positioned.

A swirl or helical wall (or fin, or helix) 1091' is arranged on the outer surface of the tube 109'. The swirl fin 1091' extends in the space defined between the tube 109' and the housing 101'.

The helix 1091' forms several turns over a complete revolution around the longitudinal axis 107' of charge air duct 100', and its outer periphery is in contact with the inner surface of the housing 101', thus defining a long swirl duct 108'.

The long duct 108' is arranged (formed) around the largest short duct and is separated from the largest short duct by a dividing wall.

The slope of the helix 1091' is here of the order of 10° relative to a horizontal plane but may vary depending on the desired long duct length.

A first opening or passage 110' is provided in the helix 1091' in the region of the air inlet of the largest short duct arranged within the tube 109'. The opening 110' allows air to flow from the air inlet 103' into the long duct 108' via a chamber 114' (which will be described later).

The first opening or passage 110' extends in a plane which is substantially perpendicular to the longitudinal axis 107' of the charge air duct 100' (the longitudinal axis of air inlet 103' of charge air duct 100' and of chamber 114' being the longitudinal axis 107').

The axis of the air inlet of the largest short duct is parallel to the longitudinal axis 107' of the charge air duct 100' (and thus parallel to the longitudinal axis of air inlet 103' of charge air duct 100'). Such a configuration is advantageous in that it limits the pressure loss of air flowing through the charge air duct 100'.

A second opening (not visible) is provided in the main duct in the region of the air outlet 104'. The second opening is located between the control device and the air outlet 104'.

The control device positioned within the air outlet 104' is preferably a three-position flap closing the largest short duct in a first position or opening the largest short duct in a second position (i.e. opening the long duct 108' in the first position or closing the long duct 108' in the second position respectively) or taking an intermediate position.

As mentioned before, during use, air compressed by a turbocharger of the combustion engine and cooled by the charge air cooler is fed in the air inlet 103', in the direction indicated by the arrow.

However, in contrast with the several embodiments described previously, air fed in the air inlet 103' first flows within a chamber 114' defined in a cylindrical hollow body 113', before flowing in the main duct or in the swirl duct 108'.

The chamber 114' provides an acoustic reflecting effect over a broad range of frequencies. It helps control the reflection while limiting the air pressure loss and aims at increasing the pulsation level in order to increase the amount of air sucked by the engine.

Air travels through the interior volume of the chamber 114' and, depending on the position of the control device, is either directed in the swirl duct 108' via the opening or passage 110' or in the main duct arranged within the tube 109'.

The air flowing through the air outlet 104' is guided in the intake manifold plenum and different combustion chambers of the engine.

Hollow body 113' may be arranged integrally with body 101' or coupled to the body 101' via mating flanges (as illustrated in figure 11). Its cross-sectional diameter is equal to the cross-sectional diameter of body 101'.

Hollow body 113' may also be arranged in a curved or angled fashion. It may be in any desired cross-sectional shape. Its shape may be adapted to the space available in the engine.

The chamber 114' may be arranged in combination with other chambers.

It is to be noted that such a chamber may be implemented in all of the embodiments described previously, on the side of the air inlet of the charge air duct.

The air inlet and outlet 103', 104' have a circular cross-section in this example. Other shapes may be envisaged.

In all of the embodiments described, the charge air duct is made of plastics.

Such a charge air duct is thus cost-effective to produce and is of relative low weight.

In an alternative, the charge air duct can be manufactured in aluminum.

The charge air duct of the invention is also easy to assemble and compact.

As mentioned previously, the charge air duct of the invention can be easily adapted to different operating situations of the engine, whether in the low speed range or in the high speed range.

The charge air duct of the invention improves the dynamic behavior of the vehicle providing more torque at low engine speed, and needing less time to torque.

It reduces fuel consumption and CO₂ emissions.

The solution of the invention can be applied to all types of turbocharged engines.

The above embodiments are to be understood as illustrative examples of the invention.

Further embodiments of the invention are envisaged.

It is to be understood that any feature described in relation to one embodiment may also be used in other of the embodiments. Furthermore, equivalents and modifications not described above may also be employed without departing from the scope of the invention, which is defined in the accompanying claims.

Throughout the description and claims of this specification, the words "comprise" and "contain" and variations of them mean "including but not limited to", and they are not intended to (and do not) exclude other components.

## Claims

1. A charge air duct (100) for delivering charge air to an intake manifold of an internal combustion engine, said charge air duct (100) comprising a housing (101) with at least one charge air inlet (103) and at least one charge air outlet (104),
**characterized in that** said charge air duct (100) comprises control means (105) arranged in the housing (101) to influence the charge air flow, the charge air being guided from the inlet (103) to the outlet (104) via a first duct (102) in a first position of the control means (105) and from the inlet (103) to the outlet (104) via a second duct (108) in a second position of the control means (105),
and **in that** said first duct (102) and said second duct (108) are of different geometry.

2. A charge air duct (100) according to claim 1, **characterized in that** the length of said second duct (108) is greater than the length of said first duct (102).

3. A charge air duct (100) according to claim 2, **characterized in that** the cross-section of said first duct (102) is greater than the cross-section of said second duct (108).

4. A charge air duct (100) according to any one of claims 1 to 3, **characterized in that** the control means (105) close said first duct (102) in said second position and open said first duct (102) in said first position without closing said second duct (108).

5. A charge air duct (100) according to any one of claims 1 to 4, **characterized in that** the control means (105) comprise a first valve (1052) rotatable about an axis (106) extending along a diameter of said first duct (102).

6. A charge air duct (100) according to any one of claims 1 to 5, **characterized in that** said second duct (108) is swirling around said first duct (102).

7. A charge air duct (100) according to any one of claims 1 to 6, **characterized in that** said first duct (102) and said second duct (108) have the same longitudinal axis (107).

8. A charge air duct (100) according to any one of claims 1 to 5, **characterized in that** the longitudinal axis (2071) of said first duct (202) and the longitudinal axis (2072) of said second duct are substantially parallel (208).

9. A charge air duct (100) according to claim 1 to 8, **characterized in that** said second duct (108) is a helical duct comprising a helical fin (1091) arranged on the outer wall of a central part (109).

10. A charge air duct (100) according to any one of claims 1 to 5, **characterized in that** the longitudinal axis (4071) of said first duct (402) and the longitudinal axis (4072) of said second duct (408) are substantially orthogonal.

11. A charge air duct (100) according to claim 10, **characterized in that** said second duct (408) comprises a first clockwise helical duct portion (4081) in communication with a second anti-clockwise helical duct portion (4082), each duct portion (4081, 4082) comprising a helical fin arranged on the outer wall of a central part (409).

12. A charge air duct (100) according to any one of claims 1 to 11, **characterized in that** it also comprises a chamber (114') arranged between said charge air inlet (103') and said first and second ducts (102, 108').

13. A charge air duct (100) according to claim 12, **characterized in that** said chamber (114') is connected to said second duct (108') via an opening (110'), said opening (110') extending in a plane substantially perpendicular to the longitudinal axis (107') of the chamber (114').

14. A charge air duct (100) according to any one of claims 9 to 13, **characterized in that** said at least one helical fin (1091) is in contact with the inner surface of said housing (101).

15. A charge air duct (100) according to claim 14, **characterized in that** said inner surface (101) and/or said at least one helical fin (1091) comprise(s) sealing means.

16. A charge air duct (100) according to any one of claims 1 to 5, **characterized in that** said second duct (308) comprise several bends (3093) designed to redirect the charge air flow by an angle comprised between 90° and 180°.

17. A charge air duct (100) according to any one of claims 1 to 16, **characterized in that** it comprises a second valve (8053) located in said second duct (808).
